# EUROPEAN PATENT SPECIFICATION

(11) **EP 3 911 554 B1**
(45) Date of publication and mention of the grant of the patent: **30.04.2025**
(21) Application number: 19876016.7
(22) Date of filing: 02.10.2019
(51) Int. Cl.: B62D 12/00, A01D 34/00, G01B 7/30, B62D 7/04, B62D 15/02, G01D 5/14

(54) **ARTICULATED ROBOTIC WORKING TOOL WITH ARTICULATION SENSOR**
GELENKIGES ROBOTISCHES ARBEITSWERKZEUG MIT GELENKSENSOR
OUTIL DE TRAVAIL ROBOTIQUE ARTICULÉ AYANT UN CAPTEUR D'ARTICULATION

(30) Priority: 24.10.2018 SE 1851312
(43) Date of publication of application: 24.11.2021
(73) Proprietor: HUSQVARNA AB, 561 82 Huskvarna (SE)
(72) Inventor: EDFORS, Lars, 564 33 BANKERYD (SE); BERGENHOLM, Magnus, 578 95 FLISBY (SE); PALM, Staffan, 560 13 HOK (SE)
(86) International application number: PCT/SE2019/050949
(87) International publication number: WO 2020/085970

(56) References cited:
- EP-A1- 2 692 220
- EP-A1- 3 273 764
- US-A- 5 535 124
- US-A1- 2014 373 497
- US-A1- 2015 185 733
- US-A1- 2015 336 609
- US-A1- 2015 336 609
- US-A1- 2016 084 436
- US-A1- 2018 001 786
- US-A1- 2018 222 528
- US-A1- 2018 222 528
- US-B1- 9 267 245

## Description

### Technical field

The present disclosure relates to an articulated self-propelled robotic tool, comprising a first platform with a first wheel assembly, a second platform with a second wheel assembly, a link arrangement connecting the first platform to the second platform at a turning axis having a vertical component, such that one of said first and second platform can be pivoted in relation to the other at said turning axis to an angular position, and a goniometer arrangement configured to sense said angular position.

### Background

One example of a self-propelled robotic tool is described in WO-2018/013045-A1 which shows an articulated robotic lawn mower. Articulated robotic tools have excellent driving abilities and can operate in difficult terrain. The use of a goniometer makes it possible to feed back data relating to the relative angular positions between the first and second platforms, which facilitates steering of the robotic tool using a control unit. One problem associated with robotic tools in general is how to make them more robust and reliable.

US-2018/222528-A1 describes a robotic vehicle with first and second spaced apart chassis platforms, each comprising a wheel assembly. A linkage is coupled to the first and the second chassis platforms, such that the second chassis platform is rotatable relative to the first chassis platform. An electric brake is disposed proximate to a turning shaft and selectively applied by processing circuitry to resist turning. An angle sensor may be mounted proximate to the turning axis.

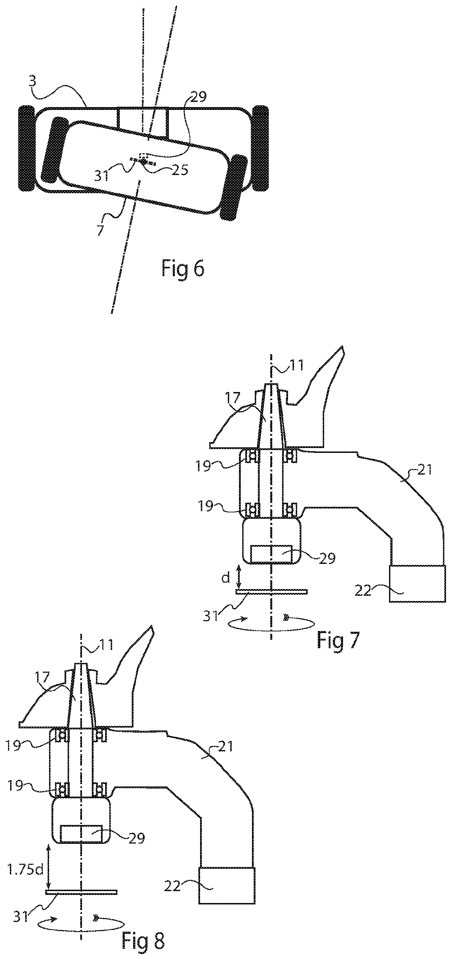

US-2018/001786-A1 describes a lawn mower with a support wheel and a wheel sensor configured to determine a position of the support wheel in relation to a housing. and Figs 8a8b illustrate a wheel sensor configured as a Hall sensor.

### Summary

One object of the present disclosure is therefore to provide a more reliable articulated robotic tool. This object is achieved by means of a robotic tool as defined in claim 1. More specifically, in a robotic tool of the initially mentioned kind, the link arrangement comprises a first part rigidly attached to the first platform, and a second part rigidly attached to the second platform being configured to pivot about the first part, and the goniometer arrangement comprises a magnet attached to the first part along the turning axis, and a Hall sensor arrangement attached to the second part along the turning axis. With such an arrangement, it is possible to achieve a goniometer with fully enclosed electronics, protecting the electronics from dust, moist etc. This is in contrast e.g. to arrangements where rheostats/potentiometers are used and where moist and dirt may disturb connectors and cause corrupted sensing. Therefore, the robotic working tool may become more robust during long-term use.

Typically, the Hall sensor arrangement may be enclosed in the second platform.

The second platform may be adapted to roll in relation to the first platform about a roll axis more or less perpendicular to the turning axis to allow the robotic working tool to operate in more difficult terrain. If so, the Hall sensor arrangement may be centered on or preferably within 5 mm from the roll axis to make sure that a sensor reading is given during roll conditions.

The Hall sensor arrangement may be adapted to detect lifting of the robotic tool. This may be accomplished by making the first part slidable along the turning axis, such that the magnet moves towards away from the Hall sensor arrangement if the robotic tool is lifted in the first or second platform. This makes it possible to detect lifting using the goniometer arrangement.

The self-propelled robotic tool may typically be a lawn mower.

### Brief description of the drawings

Fig 1A illustrates an articulated robotic tool in the form of a lawn mower.
Fig 1B illustrates schematically an example of steering an articulated robotic tool.
Fig 2 shows a cross section exposing components of a link arrangement between a first and a second part.
Fig 3 schematically shows a top view of a Hall sensor goniometer according to a first embodiment.
Figs 4 and 5 illustrate schematically a side view of a Hall sensor goniometer according to a second embodiment under two different conditions.
Fig 6 illustrates a partial roll of an articulated robotic tool.
Figs 7 and 8 illustrate schematically components of fig 2 under two different conditions where the robotic tool is capable of detecting a lift.

### Detailed description

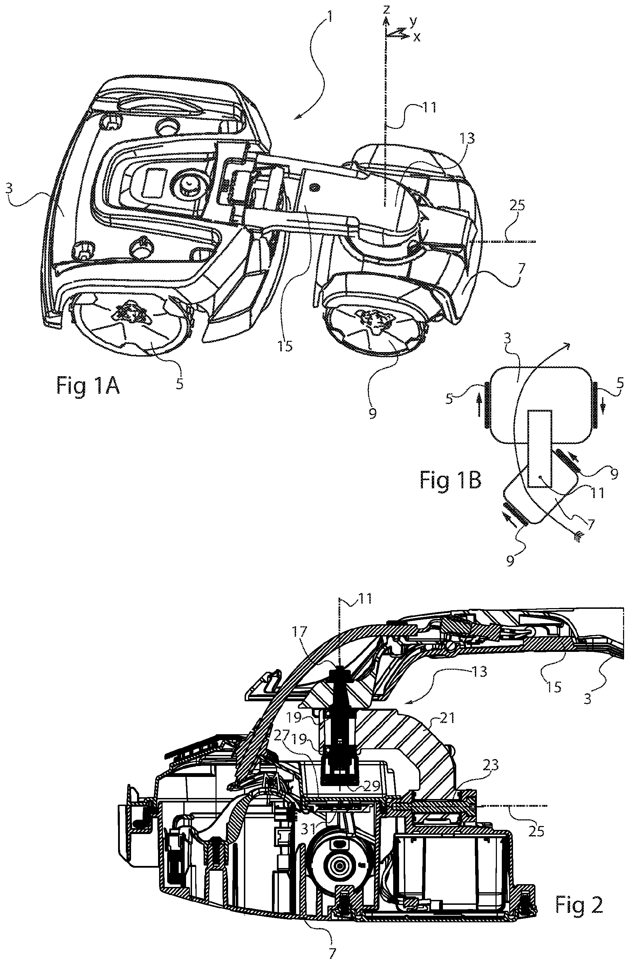

The present disclosure relates to an articulated, self-propelled robotic tool 1, as illustrated in fig 1A. In the illustrated case, the robotic tool is a lawn mower, although the robotic tool of the present disclosure may also be intended for other purposes. For instance, the present disclosure may also be useful in connection with robotic tools configured as robotic vacuum cleaners, golf ball collecting tools or any other type of robotic tool that operates over a working area. Typically, such robotic tools intermittently connect to a charging station (not shown).

As the robotic tool 1 is articulated, it comprises a first platform 3 and a second platform 7 which are interconnected by means of a link arrangement 13, 15. The first platform 3 comprises a first wheel assembly 5, in the illustrated case with two wheels (one being visible in fig 1), and the second platform 7 comprises a second wheel assembly 9. Although this is not necessary, it is very advantageous to provide each wheel with a motor, such that they can be driven individually.

The link arrangement with a joint 13 and an arm 15 connects the first and second platforms 3, 7 such that one 7 can turn with respect to the other 3 at a turning axis 11, which is vertical or at least has a significant vertical component (e.g. deviating less than 15 degrees from vertical) with regard to the surface on which the robotic tool operates, in the present case the lawn. Thus, one of first and second platforms 3, 7 can be pivoted in relation to the other at the turning axis to different mutual angular positions.

Such an articulated lawn mower has superior maneuverability e.g. compared to a single-platform robot with two driven wheels and is capable of operating in rougher lawns. An example of a lawn mower making a sharp right turn is illustrated in fig 1B. The wheels of the first wheel set 5 of the first platform 3 may then be driven in opposite directions, while the wheels of the second wheel set 9 of the second platform 7 are driving the second platform 7 towards the first platform 3. The result is a sharp right turn while the second platform turns about the turning axis 11. In order to control the movement of the lawn mower efficiently, the movement about the turning axis could be fed back to the tool's control unit

Fig 2 shows a cross section exposing components of a link arrangement between a first 3 and a second 7 platform of an articulated robotic tool as shown in fig 1A. An arm 15 (cf. also fig 1A), which is fixedly connected to and projects from the first platform 3 reaches to a position on top of the second platform 7. At this location, the arm 15 comprises a joint 13 with a shaft 17 which extends along the main turning axis 11, where the second platform 7 is allowed to turn with respect to the first platform 3. At one end, the shaft 17 is fixedly connected to the to the arm 15 of the first platform 3, and along its length, the shaft comprises a bearing arrangement 19 which is connected to the second platform 7. In the illustrated case, the bearing arrangement comprises two ball bearings 19 which are provided spaced apart along the length of the shaft 17, the inner piece of each bearing 19 being connected to the shaft 17. The outer piece of each bearing 19 is connected to the second platform 7, which is thereby made pivotable about the shaft 17 and thereby about the turning axis 11.

In the illustrated case, the bearing arrangement 19 is connected to the second platform 7 via a link 21. The shown link 21 is connected to the bearing arrangement at a first end and to the second platform 7 at a second end. As shown, the second end can optionally be connected to the second platform in a pivotable manner with a hinge 23. This makes it possible to slightly turn the first and second platforms 3, 7 in relation to each other also along a roll axis 25 (also indicated in fig 1) which means that the wheel axes of the first and second platforms 3, 7 can be slightly inclined mutually, allowing the robotic tool 1 to adapt better to the terrain on which it operates.

The present disclosure relates to a goniometer arrangement configured to sense a relative angular position between the first and second platforms 3, 7 as well as adaptation of the robotic tool's behavior based on data produced by the goniometer arrangement. By a goniometer is hereby generally meant a sensor adapted to detect an angle between two devices.

In a general link arrangement, there is provided a first part 17 attached to the first platform 3, in this case the first part is the shaft 17. A second part, in the illustrated case a top wall 27 of the second platform's housing is attached to the second platform 7, which second part is configured to pivot about first part 17.

The goniometer arrangement 29, 31 comprises a magnet 29, attached to the first part, i.e. the shaft 17 and on the turning axis 11, and a Hall sensor arrangement 31, which is attached to the second part 27 on or close to the turning axis 11.

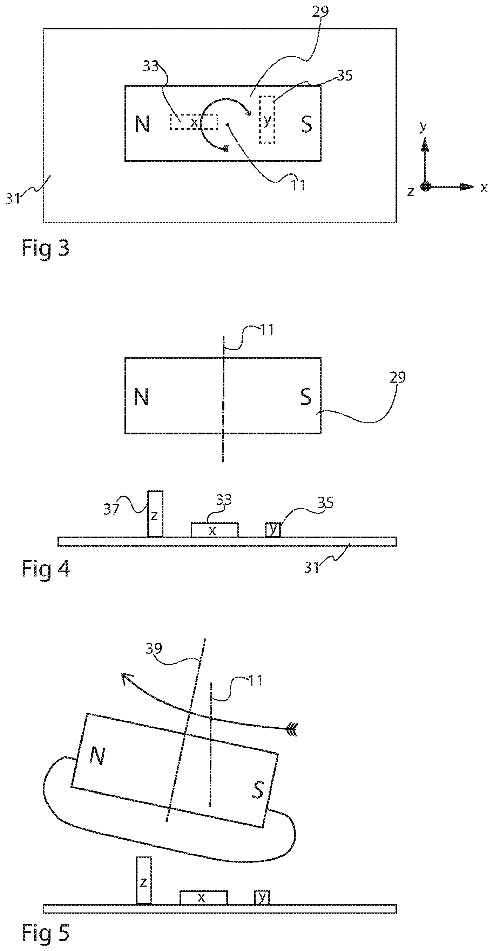

This means that the magnet 29, typically a permanent magnet, rotates in relation to the Hall sensor arrangement 31 when the relative angular position between the first and second platforms 3, 7 is changed, and this rotation can be detected by the Hall sensor. The magnet 29 may be arranged with its poles on an axis perpendicular to the turning axis 11 (cf. fig 4), although this is not necessary.

This goniometer arrangement 29, 31 provides the advantage that the electronic part of the sensor, the Hall sensor arrangement 31, can be fully encapsulated and need not be at all exposed to the environment. This is a distinct advantage compared e.g. to goniometers comprising potentiometers where a wiper, connected to one platform, runs on a resistive track, connected to another. Such a device could quickly degrade if used e.g. in a lawn mower cutting moist grass.

Fig 3 schematically shows a top view of a Hall sensor goniometer arrangement 29, 31 according to a first embodiment. The view is seen from the top of the robotic tool along the turning axis 11, and, as mentioned, the permanent magnet 29 is rotatable about the turning axis 11 and with respect to the hall sensor arrangement 31 (or vice versa). The Hall sensor arrangement 31 may comprise a printed circuit board with a number of components. In the illustrated case, the sensor is a two-dimensional sensor having one Hall element 33 directed along the x-axis (cf. fig 1) and one Hall element 35 directed along the y-axis. This orientation is only an example, and the Hall sensor arrangement 31 may be capable to detect an angle as long as the elements 33, 35 are not parallel in the horizontal plane. Turning the permanent magnet 29 about the turning axis 11 will give varying responses in the Hall elements 33, 35, typically sine and cosine functions corresponding to an angle between the first and second platforms 3, 7. This may thus be sufficient to provide a goniometer reading that can be used by the robotic tool's control unit.

Figs 4 and 5 illustrate schematically a side view of a Hall sensor goniometer 29, 31. In principle, there may be provided a third Hall element 37 which is directed in the z-direction, orthogonal with the x- and y-directions, thereby providing a three-dimensional Hall sensor arrangement. While this added Hall element 37 does not give a response to turning about the turning axis 11 as such, it may still provide data that is useful under some circumstances.

For instance, if the shaft 17 (cf. fig 2) tilts from the original turning axis 11 to a tilted axis 39, this can be detected by the z-axis Hall element 37. Such a tilt can result from the robotic tool moving over rough terrain which makes the first and second platforms turn mutually also about the roll axis 25 (cf. fig 1A and 2). The detection of the tilt as well as the sensed angular position can be used by the robotic tool's control unit.

Fig 6 illustrates schematically a roll of an articulated robotic tool. In this case, the second platform 7 rolls slightly in relation to the first platform 3, which is a movement that could be registered by the three-dimensional Hall sensor arrangement of figs 4 and 5, and this data could be fed back to the robotic tool's control unit to improve the steering of the robotic tool. In order to operate well under this condition, the Hall sensor arrangement 31 should be reasonably centered with respect to the roll axis 25 typically on the roll axis 25 or preferably 5 mm or less from the roll axis 25. In the illustrated case, the roll axis passes through the plane of the Hall sensor arrangement 31 circuit board.

The distance d between the magnet and 29 and the part 27 located under the magnet and being attached to the second platform could preferably be spaced apart at least 4 mm to allow this movement.

Further, the sensor arrangement could be adapted to detect lifting of the robotic tool 1. This is important in many cases. For instance, with a robotic lawn mower it is important that lift is detected e.g. to disable the very sharp rotating knives under the lawn mower to avoid injuring a user, or to detect possible attempted theft.

This could be arranged using the Hall sensor arrangement, as illustrated in figs 7 and 8. In this case, the link 21 connecting the bearings 19 to the second platform is provided with a resilient telescopic feature 22 that allows the link to be elongated along the turning axis 11. Therefore, as illustrated in fig 8, if a user lifts the robotic tool holding the first platform 3, the link 21 may expand such that the magnet 29 is moved away from the Hall sensor circuit 31. For instance, the distance there between may increase from 1.0d to 1.75d as shown in figs 7 to 8 by lifting the robotic tool. This lowers the magnetic field sensed in both the x- and y-directions, and therefore the Hall sensor arrangement 29, 31 may be used to sense a lift. Lifting in the second platform 7 could cause the magnet 29 to instead move towards the Hall sensor circuit 31.

In general, the first part/shaft 17 may thus be slidable along the turning axis 11, such that the magnet moves away from the Hall sensor arrangement 31 if the robotic tool is lifted in the first platform 3.

Upon sensing the lift, the robotic tool may be configured to disable rotating knives, etc.

The present disclosure is not limited to the above-described examples and may be varied and altered in different ways within the scope of the appended claims.

## Claims

1. An articulated, self-propelled robotic tool (1), comprising
- a first platform (3) comprising a first wheel assembly (5),
- a second platform (7) comprising a second wheel assembly (9),
- a link arrangement (15, 17, 19, 21) connecting the first platform to the second platform at a turning axis (11) having a significant vertical component, such that one of said first and second platform (3, 7) can be pivoted in relation to the other at said turning axis to an angular position, and
- a goniometer arrangement configured to sense said angular position, **characterized by:**
said link arrangement comprising a first part (17) rigidly attached to the first platform (3), and a second part (27) rigidly attached to the second platform (7) and configured to pivot about the first part, and
said goniometer arrangement comprising a magnet (29) attached to the first part at said turning axis, and a Hall sensor arrangement (31) attached to the second part at said turning axis.

2. Self-propelled robotic tool according to claim 1, wherein the Hall sensor arrangement (31) is enclosed in the second platform (7).

3. Self-propelled robotic tool according to claim 2, wherein the second platform (7) is adapted to roll in relation to the first platform 3 about a roll axis (25) which is substantially perpendicular to the turning axis (11), and wherein the Hall sensor arrangement is centered 5 mm or less from the roll axis (25).

4. Self-propelled robotic tool according to any of claims 1-3, wherein the Hall sensor arrangement is adapted to detect lifting of the robotic tool.

5. Self-propelled robotic tool according to claim 4, wherein the first part is slidable along the turning axis (11), such that the magnet moves towards or away from the Hall sensor arrangement (31) if the robotic tool is lifted in either of the first or second platforms (3, 7).

6. Self-propelled robotic tool according to any of the preceding claims, wherein the self-propelled robotic tool is a lawn mower.

## Patentansprüche

1. Gelenkiges, selbstangetriebenes Roboterwerkzeug (1), umfassend
- eine erste Plattform (3), umfassend eine erste Radanordnung (5),
- eine zweite Plattform (7), umfassend eine zweite Radanordnung (9),
- eine Verknüpfungsanordnung (15, 17, 19, 21), die die erste Plattform mit der zweiten Plattform an einer Drehachse (11) verbindet, die eine signifikante vertikale Komponente derart aufweist, dass eine der ersten und der zweiten Plattform (3, 7) in Bezug auf die andere an der Drehachse in eine Winkelposition geschwenkt werden kann, und
- eine Goniometeranordnung, die konfiguriert ist, um die Winkelposition zu erfassen, **gekennzeichnet durch:**
die Verknüpfungsanordnung umfassend einen ersten Teil (17), der starr an der ersten Plattform (3) angebracht ist, und einen zweiten Teil (27), der starr an der zweiten Plattform (7) angebracht ist und konfiguriert ist, um um den ersten Teil herum zu schwenken, und
die Goniometeranordnung umfassend einen Magneten (29), der an dem ersten Teil an der Drehachse angebracht ist, und eine Hall-Sensoranordnung (31), die an dem zweiten Teil an der Drehachse angebracht ist.

2. Selbstangetriebenes Roboterwerkzeug nach Anspruch 1, wobei die Hall-Sensoranordnung (31) in der zweiten Plattform (7) eingeschlossen ist.

3. Selbstangetriebenes Roboterwerkzeug nach Anspruch 2, wobei die zweite Plattform (7) angepasst ist, um in Bezug auf die erste Plattform 3 um eine Rollachse (25) herum zu rollen, die im Wesentlichen senkrecht zu der Drehachse (11) verläuft, und wobei die Hall-Sensoranordnung 5 mm oder weniger von der Rollachse (25) zentriert ist.

4. Selbstangetriebenes Roboterwerkzeug nach einem der Ansprüche 1 bis 3, wobei die Hall-Sensoranordnung angepasst ist, um ein Anheben des Roboterwerkzeugs zu erkennen.

5. Selbstangetriebenes Roboterwerkzeug nach Anspruch 4, wobei der erste Teil entlang der Drehachse (11) derart verschiebbar ist, dass sich der Magnet auf die Hall-Sensoranordnung (31) zu oder von ihr weg bewegt, falls das Roboterwerkzeug auf eine der ersten oder der zweiten Plattform (3, 7) angehoben wird.

6. Selbstangetriebenes Roboterwerkzeug nach einem der vorstehenden Ansprüche, wobei das selbstangetriebene Roboterwerkzeug ein Rasenmäher ist.

## Revendications

1. Outil robotique articulé et autopropulsé (1), comprenant
- une première plate-forme (3) comprenant un premier ensemble de roues (5),
- une seconde plate-forme (7) comprenant un second ensemble de roues (9),
- un dispositif de liaison (15, 17, 19, 21) reliant la première plate-forme à la seconde plate-forme au niveau d'un axe de rotation (11) ayant une composante verticale significative, de sorte que une desdites première et seconde plates-formes (3, 7) peut être pivotée par rapport à l'autre au niveau dudit axe de rotation jusqu'à une position angulaire, et
- un dispositif goniométrique configuré pour détecter ladite position angulaire, **caractérisé par** :
ledit dispositif de liaison comprenant une première partie (17) fixée de manière rigide à la première plate-forme (3), et une seconde partie (27) fixée de manière rigide à la seconde plate-forme (7) et conçue pour pivoter autour de la première partie, et
ledit dispositif de goniomètre comprenant un aimant (29) fixé à la première partie au niveau dudit axe de rotation, et un dispositif de capteur à effet Hall (31) fixé à la seconde partie au niveau dudit axe de rotation.

2. Outil robotique autopropulsé selon la revendication 1, dans lequel le capteur à effet Hall (31) est enfermé dans la seconde plate-forme (7).

3. Outil robotique autopropulsé selon la revendication 2, dans lequel la seconde plate-forme (7) est adaptée pour rouler par rapport à la première plate-forme 3 autour d'un axe de roulement (25) qui est sensiblement perpendiculaire à l'axe de rotation (11), et dans lequel le capteur à effet Hall est centré à 5 mm ou moins de l'axe de roulement (25).

4. Outil robotique autopropulsé selon l'une quelconque des revendications 1 à 3, dans lequel le capteur à effet Hall est adapté pour détecter le soulèvement de l'outil robotique.

5. Outil robotique autopropulsé selon la revendication 4, dans lequel la première partie est coulissante le long de l'axe de rotation (11), de sorte que l'aimant se rapproche ou s'éloigne du capteur à effet Hall (31) si l'outil robotique est soulevé dans la première ou la seconde plate-forme (3, 7).

6. Outil robotique autopropulsé selon l'une quelconque des revendications précédentes, dans lequel l'outil robotique autopropulsé est une tondeuse à gazon.
